# EUROPÄISCHE PATENTANMELDUNG

(11) **EP 0 625 484 A1**
(43) Veröffentlichungstag der Anmeldung: **23.11.1994**
(21) Anmeldenummer: 94103411.8
(22) Anmeldetag: 07.03.1994
(51) Int. Cl.: C02F 3/20

(54) **Belüftervorrichtung für mit einem Flüssigkeitsmedium beaufschlagten Becken, insbesondere Klärbecken**

(30) Priorität: 25.03.1993 DE 4309686
(71) Anmelder: Egner, Siegfried, D-74740 Adelsheim (DE)
(72) Erfinder: Egner, Siegfried, D-74740 Adelsheim (DE); Blaha, Stefan, D-74706 Osterburkener (DE); Pauli, Gerhard, D-74740 Adelsheim (DE)
(74) Vertreter: Clemens, Gerhard, Dr.-Ing.

(57) **Zusammenfassung**

Eine Belüftervorrichtung (10) für mit einem Flüssigkeitsmedium beaufschlagten Becken, insbesondere Klärbecken, mit einer auf seiner Oberseite mit dem Flüssigkeitsmedium in Kontakt bringbaren elastischen Membraneinrichtung (24), die infolge ihrer Elastizität sich öffnende und verschließende Ausnehmungen aufweist, und einer auf der Unterseite der Membraneinrichtung angeordneten Unterkonstruktion (12), an der die Randbereiche der Membraneinrichtung (24) dicht angeschlossen sind, wobei der Bereich zwischen Unterkonstruktion (12) und Membraneinrichtung (24) mit einem gasförmigen Druckmedium beaufschlagbar ist und sich die Membraneinrichtung (24) bei Druckbeaufschlagung wölbt, wodurch sich die Ausnehmungen öffnen und das Druckmedium in das darüberbefindliche Flüssigkeitsmedium strömen kann, zeichnet sich dadurch aus, daß zwischen der Membraneinrichtung (24) und der Unterkonstruktion (12) eine an der Unterkonstruktion (12) befestigte Trageinrichtung (18) vorhanden ist, an der die Membraneinrichtung (24) zumindest bereichsweise oder punktuell innerhalb ihrer Randbereiche mittels einer Anschlußeinrichtung (28) angeschlossen ist. Mit der erfindungsgemäßen Belüftervorrichtung ist ein gleichmäßiges Beaufschlagen des Flüssigkeitsmediums über eine große Fläche möglich.

## Beschreibung

### TECHNISCHES GEBIET

Die vorliegende Erfindung betrifft eine Belüftervorrichtung für mit einem Flüssigkeitsmedium beaufschlagten Becken, insbesondere Klärbecken, mit einer auf seiner Oberseite mit dem Flüssigkeitsmedium in Kontakt bringbaren elastischen Membraneinrichtung, die infolge der Elastizität der Membraneinrichtung sich öffnende und verschließende Ausnehmungen aufweist, und einer auf der Unterseite der Membraneinrichtung angeordneten Unterkonstruktion, an der die Randbereiche der Membraneinrichtung dicht angeschlossen sind, wobei der Bereich zwischen Unterkonstruktion und Membraneinrichtung mit einem gasförmigen Druckmedium beaufschlagbar ist und sich die Membraneinrichtung bei Druckbeaufschlagung wölbt, wodurch sich die Ausnehmungen öffnen und das Druckmedium in das Flüssigkeitsmedium strömen kann.

Derartige Belüftervorrichtungen dienen dazu, vornehmlich Sauerstoff in Belebungsbecken von Kläranlagen einzutragen, um eine gute Klärwirkung zu gewährleisten. Dabei wird angestrebt, eine möglichst große Membranfläche zur Verfügung zu stellen, um die Realisierung einer Flächenbelüftung zu gewährleisten, die zum Erzielen einer guten Klärwirkung dient.

### STAND DER TECHNIK

Die bekannten Belüftervorrichtungen bestehen im wesentlichen aus einer Platte, über die eine Kunststoffmembran, die aus einer gelochten Kunststoffolie besteht, gespannt ist. In der Mitte der Platte ist ein Luftzufuhrstutzen angeordnet. Die zur Belüftung zur Verfügung stehende Membranfläche ist sehr gering und beträgt in der Regel < 0,1 m². Daher müssen bei einer flächendeckenden Belüftung sehr viele Belüftungselemente installiert werden, was zu hohen Material- und Montagekosten führt.

Durch die Lochung der Membran im Bereich des Luftzufuhrstutzens kann es bei Abschalten der Luftzufuhr zum Eindringen von Wasser/Belebtschlammgemisch in den Belüfter kommen und zu einer Verstopfung der Membran bzw. des gesamten Belüfters kommen, dadurch, daß sich die Ausnehmungen der Membran infolge Flüssigkeitsdruck nach unten öffnen. Durch die mittige Anordnung des Luftzufuhrstutzens wird aufgrund der Dehnung der Membran der mittlere Membranbereich ausreichend mit Druckluft versorgt, während der Randbereich infolge Druckverlust nur sehr wenig mit Luft beaufschlagt wird. Dies hat zur Folge, daß im mittleren Bereich eine größere Menge Sauerstoff austritt, wodurch ein ungleichmäßiges Blasenbild entsteht. Bei den bekannten Belüftervorrichtungen mit größeren Membranflächen werden, um eine zu große Dehnung der Membranmitte zu verhindern, sogenannte Niederhalteleisten auf der Membranoberfläche aufgebracht, so daß die Membranfläche in mehrere Teilflächen unterteilt ist. An den oberseitig und mit dem Klärmedium in Kontakt kommenden Niederhalteleisten kann sich nun Belebtschlamm in abgeschaltetem Zustand absetzen, der im Bereich der Leiste zu Verstopfungen der Membran oder im Extremfall sogar zu Bakterienbewuchs führen kann.

In zunehmenden Maße wird derzeit ein intermittierender Betrieb von Kläranlagen angestrebt, d.h., daß bereichs- und oder zeitweise Sauerstoff dem Klärmedium zugeführt wird, und dadurch variable Nitrifikations- und Denitrifikationszonen geschaffen werden. Dieser intermittierende Betrieb hat jedoch zur Folge, daß die bekannten Membranvorrichtungen für größere Belüftungsflächen im nicht mit Druck beaufschlagten Zustand, insbesondere im Eckbereich zwischen Niederhalteleiste und Membraneinrichtung, mit Belebtschlamm bedeckt werden, was im Laufe der Zeit zu einer Verstopfung der in diesem Bereich vorhandenen Ausnehmungen der Membraneinrichtung führt.

### DARSTELLUNG DER ERFINDUNG

Der Erfindung liegt die Aufgabe zugrunde, eine Belüftervorrichtung anzugeben, die die Verwirklichung einer großen Membranfläche gewährleistet, und gleichzeitig das Absetzen von in dem Klärmedium vorhandenen Schlammelementen bei intermittierendem Betrieb dahingehend verhindert, daß keine Verstopfungen der Membran auftreten. Desweiteren zielt die erfindungsgemäße Vorrichtung darauf ab, eine gleichmäßige Verteilung über die Membraneinrichtung des bei Druckbeaufschlagung austretenden Druckmediums zu gewährleisten. Des weiteren ist es Aufgabe der Erfindung, eine Belüftervorrichtung anzugeben, bei der ein geringer Materialaufwand in der Herstellung ermöglicht wird und die einfach montiert werden kann, wobei gleichzeitig wirtschaftliche Kennwerte für die Belüftungsvorrichtung erzielt werden können, wie beispielsweise geringer Druckverlust, hohes Druckmedium-Eintragsvermögen und hohe Druckmedium-Eintragsmenge pro Energieeinheit.

Die erfindungsgemäße Belüftervorrichtung ist durch die Merkmale des Anspruchs 1 gegeben. Vorteilhafte Ausgestaltungen und Weiterbildungen der erfindungsgemäßen Belüftervorrichtung sind durch die Merkmale der Unteransprüche gegeben.

Die erfindungsgemäße Belüftervorrichtung zeichnet sich demgemäß dadurch aus, daß zwischen der Membraneinrichtung und der Unterkonstruktion eine an der Unterkonstruktion befestigte Trageinrichtung vorhanden ist, an der die Membraneinrichtung zumindest bereichsweise oder punktuell innerhalb ihrer Randbereiche mittels einer Anschlußeinrichtung angeschlossen ist.

Durch die erfindungsgemäße Belüftervorrichtung ist die Verwirklichung einer großen Membranfläche, die nicht durch die oberseitig angeordneten Niederhalteleisten befestigt werden muß, ermöglicht, dadurch daß die Membraneinrichtung an einer unterseitig angeordneten Trageinrichtung befestigt wird. Dadurch werden Verstopfungsprobleme beseitigt, da sich die Membraneinrichtung in Ruhestellung auf der Trageinrichtung abstützen kann. Gleichzeitig wird für eine gleichmäßige Beaufschlagung durch das Druckmedium, gesorgt, da erfindungsgemäß die Unterkonstruktion als Hohlkasten ausgebildet ist. Durch einen oder mehrere Druckmedium-Zuführungsstutzen gelangt das Druckmedium in den Bereich zwischen der Unterkonstruktion und der Trageinrichtung. Dadurch wird die Membraneinrichtung mehr oder minder gleichmäßig mit dem Druckmedium beaufschlagt über den gesamten Querschnitt der Membraneinrichtung. Dadurch, daß die Membraneinrichtung infolge der unterseitig angeordneten Trageinrichtung in mehrere Teilflächen einteilbar ist, wird verhindert, daß sich die Membraneinrichtung bei Druckbeaufschlagung infolge ihrer Dehnung zu sehr aufwölbt, woduch vermieden wird, daß, wie bei den bekannten Belüftervorrichtungen, das Druckmedium vornehmlich nur in dem Bereich durch die Membraneinrichtung hindurch austritt, der infolge seiner Dehnung einen großen Ausnehmungsquerschnitt bei Druckbeaufschlagung einnimmt, und in den Randbereichen relativ wenig Druckmedium durch die Ausnehmungen der Membraneinrichtung infolge ihrer geringen Dehnung austritt. Dadurch wird eine flächenartige Austrittsmöglichkeit des Druckmediums in das Flüssigkeitsmedium gewährleistet, die einen wirtschafltichen Kennwert für derartige Belüftervorrichtungen (Druckverlust, Druckmedium-Eintragungsvermögen Druckmedium-Ertragsmenge pro Energieeinheit) gewährleistet.

In einer bevorzugten Ausführungsform der erfindungsgemäßen Belüftervorrichtung ist an die Membraneinrichtung als Anschlußeinrichtung unterseitig zumindest ein Verankerungselement angeformt, das mit der Trageinrichtung in Eingriff bringbar ist. Die Trageinrichtung ist hierbei so ausgebildet, daß sich die Membraneinrichtung im Falle der Nicht-Druckbeaufschlagung auf der Oberseite der Trageinrichtung anlegt, wobei in diesem Zustand die Ausnehmungen der Membraneinrichtung verschlossen sind, d.h. das Klärmedium nicht in den Bereich unterhalb der Membraneinrichtung in die Unterkonstruktion eindringen kann.

In einem bevorzugten Ausführungsbeispiel der erfindungsgemäßen Belüftervorrichtung sind die Verankerungselemente in einem vorgebbaren Raster angeordnet. Dadurch lassen sich beliebig große Flächen der Membraneinrichtung verwirklichen. Durch das vorgebbare Rastermaß kann die Dehnung der Membraneinrichtung bei Druckbeaufschlagung in einer Größenordnung gehalten werden, daß ein ausreichender gleichmäßiger Durchtritt des Druckmediums durch die Membraneinrichtung im beaufschlagten Zustand im Bereich des jeweiligen Rastermaßes gewährleistet werden kann.

In einer hinsichtlich der Funktionalität und geringer Druckverluste besonders bevorzugten Ausführungsform der erfindungsgemäßen Belüftervorrichtung ist die Anschlußeinrichtung derart ausgebildet, daß nach Druckbeaufschlagung des zwischen der Membraneinrichtung und der Unterkonstruktion vorhandenen Raumes, zunächst zumindest bereichsweise eine Translationsbewegung der Membraneinrichtung möglich ist und danach die Membraneinrichtung infolge Druckbeaufschlagung gedehnt wird. Die zuerst stattfindende Translationsbewegung bei Druckbeaufschlagung gewährleistet, daß eine über die gesamte Fläche der Membraneinrichtung wirkende Druckbeaufschlagung nahezu ohne Druckverlust in den Randbereichen ermöglicht wird, was den Wirkungsgrad deutlich erhöht.

In einer konstruktiv besonders einfachen Ausgestaltung der erfindungsgemäßen Belüftervorrichtung weist die Anschlußeinrichtung zumindest ein Kragarmelement auf, das mit einer an der Trageinrichtung vorhandenen Ausnehmung in Eingriff bringbar ist.

In einer bezüglich großer Membranflächen besonders vorteilhaften Ausgestaltung weist die Membraneinrichtung zumindest bereichsweise unterseitig angeformte, einen Hohlraum bildende Profilelemente auf, innerhalb derer im wesentlichen stabförmige Tragelemente angeordnet sind, die die Trageinrichtung bilden.

Die Befestigung der Profilelemente bzw. Kragarmelemente kann beispielsweise durch Aufvulkanisierung auf die Membraneinrichtung verwirklicht werden.

Eine hinsichtlich Dichtwirkung und einfacher Montage sich auszeichnende Ausführungsform ist dadurch gekennzeichnet, daß an die Membraneinrichtung im Randbereich eine nach unten überstehende Dichtlippe angeformt ist, die mit einer in der Unterkonstruktion vorhandenen entsprechenden Ausnehmung in Eingriff bringbar ist.

Vorteilhafte Ausgestaltungen und Weiterbildungen der Belüftervorrichtung sind Gegenstand weiterer Unteransprüche. Die Merkmale der Ansprüche können in beliebiger Weise miteinander kombiniert werden, insoweit sie sich nicht offensichtlich ausschließen.

### KURZE BESCHREIBUNG DER ZEICHNUNG

Die Erfindung sowie vorteilhafte Ausführungsformen und Weiterbildung derselben werden im folgenden anhand der in der Zeichnung dargestellten Beispiele beschrieben und erläutert. Die in der Beschreibung der Zeichnung zu entnehmenden Merkmale können einzeln für sich oder zu mehreren in beliebiger Kombination erfindungsgemäß angewandt werden. Es zeigen:
- Fig. 1: Schematische Draufsicht auf ein erstes Ausführungsbeispiel der erfindungsgemäßen Belüftervorrichtung,
- Fig. 2: Schematischer Querschnitt der Belüftervorrichtung gemäß Fig. 2 entlang dem Schnitt A-A,
- Fig. 3: Schematische Draufsicht auf die Unterkonstruktion der Belüftervorrichtung gemäß Fig. 1,
- Fig. 4: Schematischer Querschnitt durch die Unterkonstruktion gemäß Fig. 3 entlang dem Schnitt A-A,
- Fig. 5: Schematische Draufsicht auf die Trageinrichtung der Belüftungsvorrichtung gemäß Fig. 1,
- Fig. 6: Schematischer Querschnitt durch die Trageinrichtung gemäß Fig. 5 entlang dem Schnitt A-A,
- Fig. 7: Schematische Draufsicht auf eine Membraneinrichtung der Belüftungsvorrichtung gemäß Fig. 1,
- Fig. 8: Schematischer Querschnitt durch die Membranvorrichtung gemäß Fig. 7 entlang dem Schnitt A-A,
- Fig. 9a, b: Schematische Schnittdarstellungen eines Verankerungselements der Membraneinrichtung gemäß Fig. 8,
- Fig. 10: Schematische Draufsicht auf eine zweite Ausführungsform der erfindungsgemäßen Belüftervorrichtung,

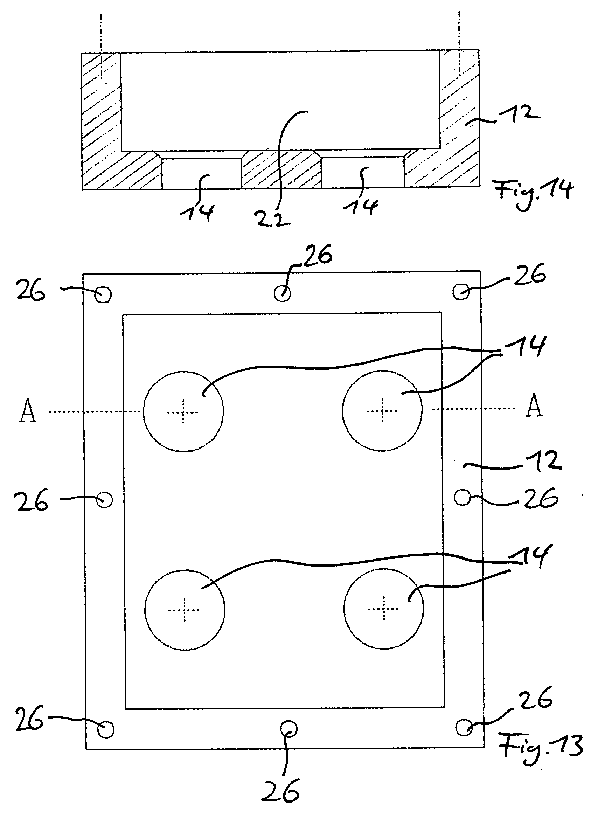

- Fig. 11: Schematischer Querschnitt der Belüftungsvorrichtung gemäß Fig. 10 entlang dem Schnitt A-A,
- Fig. 12: Schematischer Querschnitt der Belüftungsvorrichtung gemäß Fig. 10 entlang dem Schnitt B-B,
- Fig. 13: Schematische Draufsicht auf eine Unterkonstruktion der Belüftervorrichtung gemäß Fig. 10,

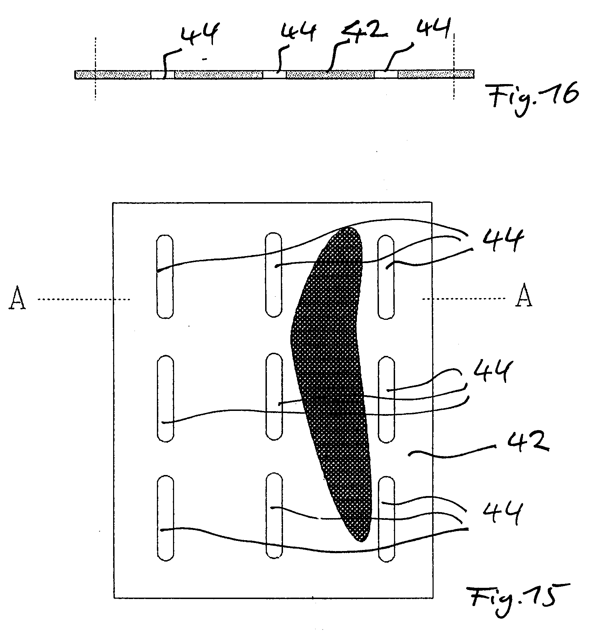

- Fig. 14: Schematischer Querschnitt durch eine Unterkonstruktion gemäß Fig. 13 entlang dem Schnitt A-A,
- Fig. 15: Schematische Draufsicht auf eine Trageinrichtung der Belüftervorrichtung gemäß Fig. 10,
- Fig. 16: Schematischer Querschnitt durch die Trageinrichtung gemäß Fig. 15 entlang dem Schnitt A-A,

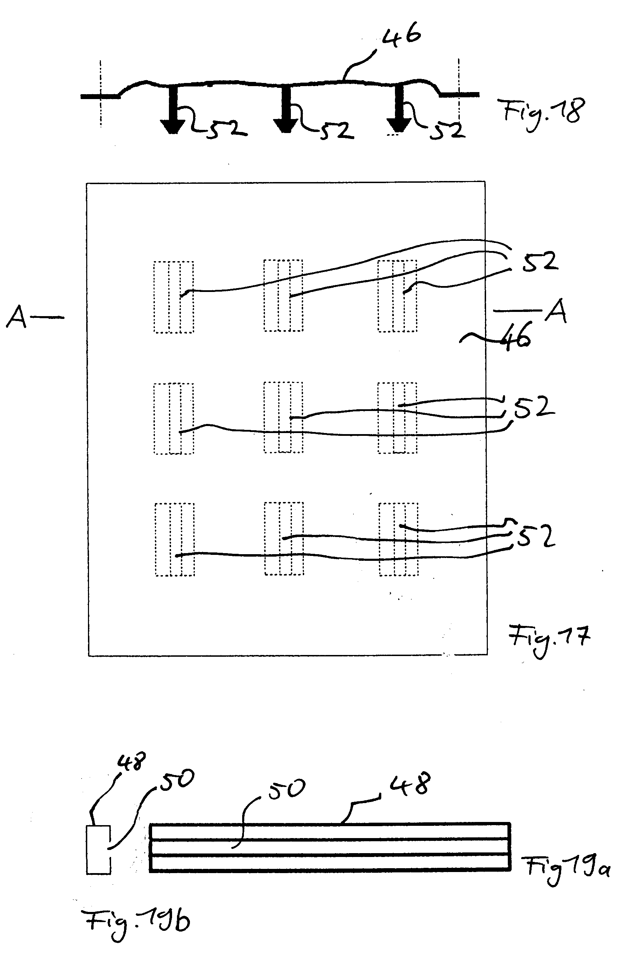

- Fig. 17: Schematische Draufsicht auf eine Membraneinrichtung der Belüftungsvorrichtung gemäß Fig. 10,
- Fig. 18: Schematischer Querschnitt durch eine Membraneinrichtung gemäß Fig. 17 entlang dem Schnitt A-A,
- Fig. 19a,b: Schematischer Längsschnitt bzw. Querschnitt durch ein Tragprofil gemäß der Belüftervorrichtung gemäß Fig. 10,

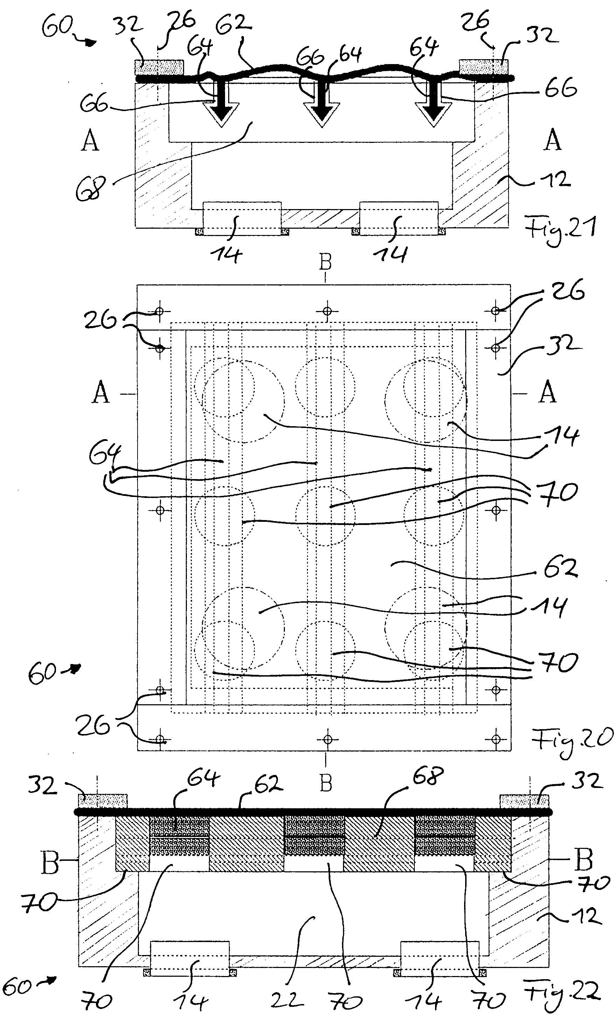

- Fig. 20: Schematische Draufsicht auf ein drittes Ausführungsbeispiel der erfindungsgemäßen Belüftervorrichtung,
- Fig. 21: Schematischer Querschnitt der Belüftervorrichtung gemäß Fig. 20 entlang dem Schnitt A-A
- Fig. 22: Schematischer Querschnitt der Belüftervorrichtung gemäß Fig. 20 entlang dem Schnitt B-B,
- Fig. 23: Schematische Draufsicht auf eine Trageinrichtung der Belüftungsvorrichtung gemäß Fig. 20,
- Fig. 24: Schematischer Querschnitt durch die Trageinrichtung gemäß Fig. 23 entlang dem Schnitt A-A,
- Fig. 25: Schematischer Längsschnitt durch die Tragvorrichtung gemäß Fig. 23 entlang dem Schnitt B-B,
- Fig. 26: Schematische Draufsicht auf die Unterkonstruktion der Belüftungsvorrichtung gemäß Fig. 20,
- Fig. 27: Schematischer Querschnitt durch die Unterkonstruktion gemäß Fig. 26 entlang dem Schnitt A-A,
- Fig. 28: Schematischer Längsschnitt durch die Unterkonstruktion gemäß Fig. 26 entlang dem Schnitt B-B,
- Fig. 29: Schematische Draufsicht auf die Membraneinrichtung der Belüftungsvorrichtung gemäß Fig. 20 und

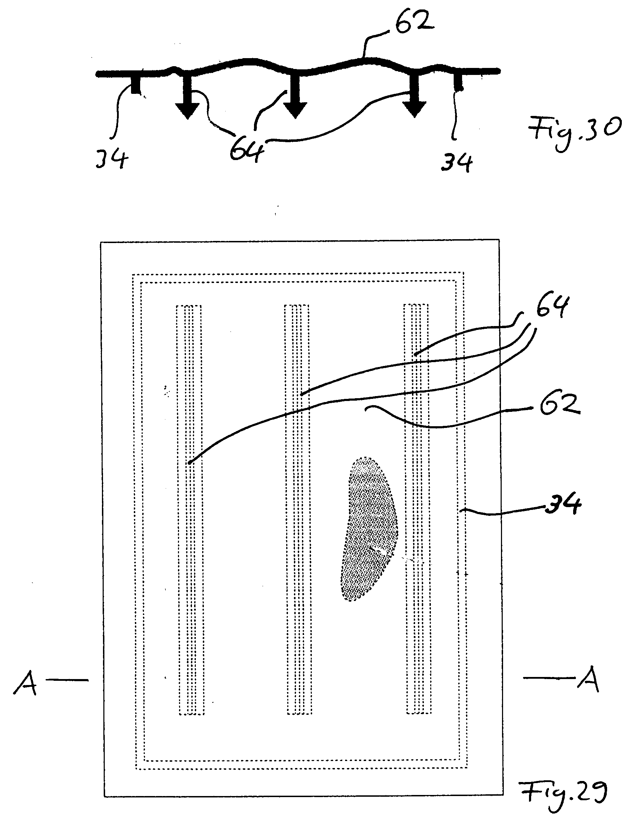

- Fig. 30: Schematischer Querschnitt durch die Membraneinrichtung gemäß Fig. 29 entlang dem Schnitt A-A.

### WEGE ZUR AUSFÜHRUNG DER ERFINDUNG

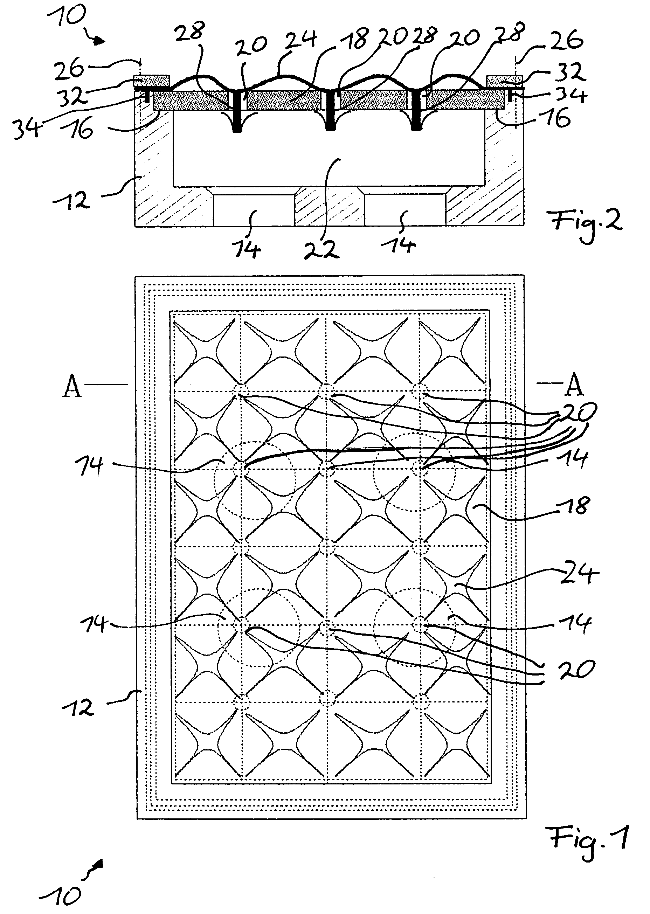

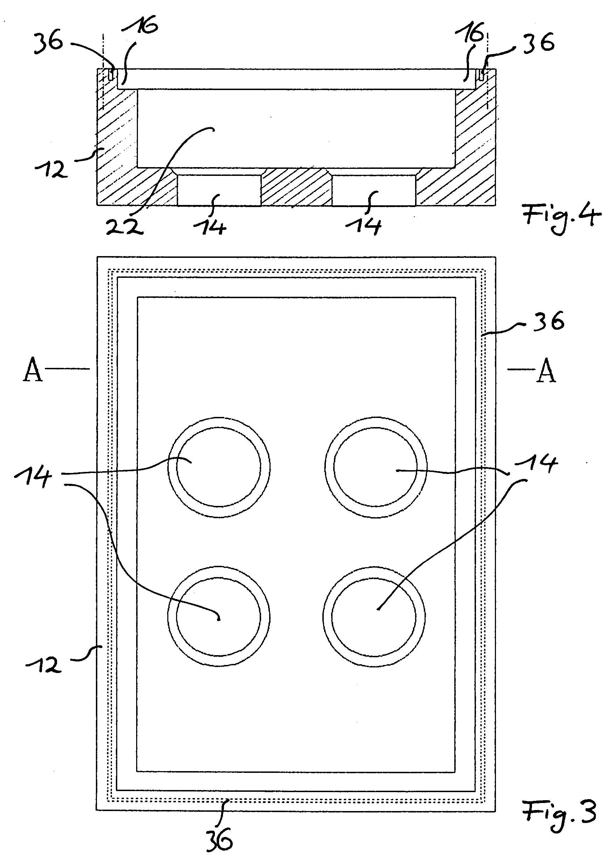

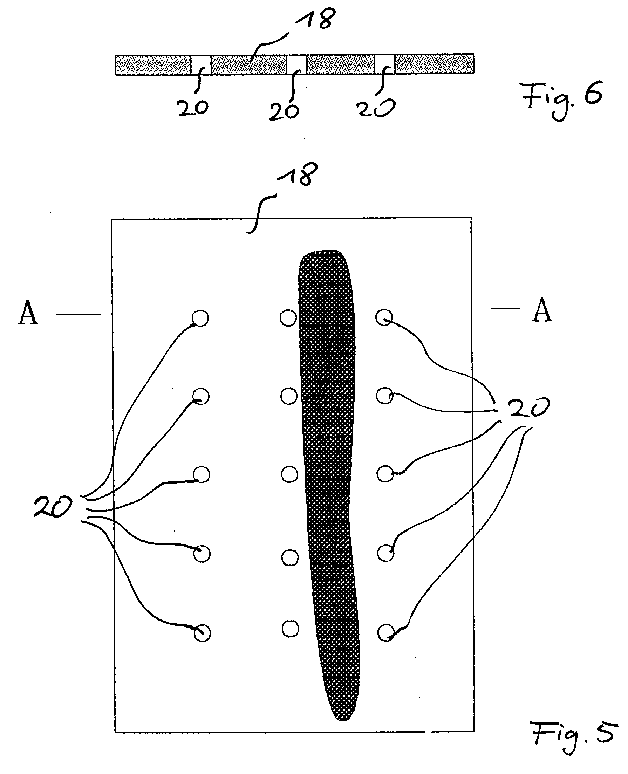

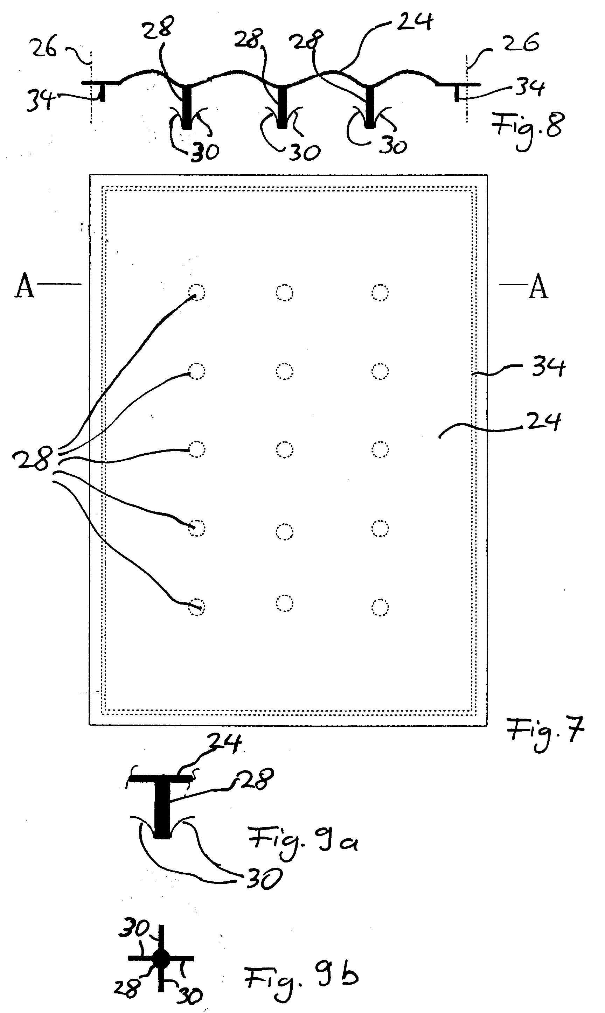

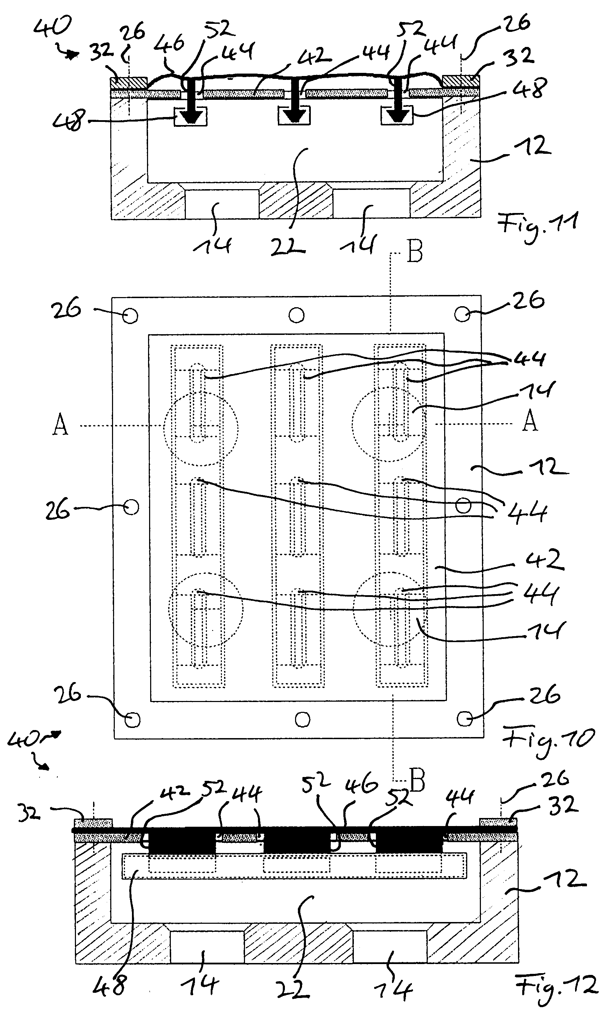

Ein in den Fig. 1 - 9b dargestelltes erstes Ausführungsbeispiel einer Belüftervorrichtung 10 weist eine im Querschnitt U-förmig ausgebildete, wannenförmige Unterkonstruktion 12 auf, wobei auf der Unterseite der Unterkonstruktion 12 insgesamt vier Luftzufuhrstutzen 14 vorhanden sind. Im oberen umlaufenden Randbereich der Unterkonstruktion 12 ist eine nach oben und ins Innere der Unterkonstruktion 12 sich erstreckende Ausnehmung 16 vorhanden, die unterseitig als Auflagerflache für eine auf der Unterkonstruktion 12 aufgelagerte Trageinrichtung 18 dient. Die Trageinrichtung 18 ist hierbei als insbesondere Platte mit in einem vorgegebenen Raster angeordneten Ausnehmungen 20 ausgebildet. Zwischen der Trageinrichtung 18 und der unteren Bodenplatte der Unterkonstruktion ist somit ein Hohlraum 22 vorhanden, der über die Luftzufuhrstutzen 14 mit Druckluft beaufschlagt werden kann.

In sämtlichen Ausführungsbeispielen sind die Druckluftzuführeinrichtungen nicht dargestellt. Auch sind die schlitzförmigen Ausnehmungen einer im jeweiligen Beispielsfall vorhandenen Membraneinrichtungen nicht näher dargestellt. Durch diese schlitzförmigen Ausnehmungen kann bei gedehnter Membraneinrichtung Druckluft in das darüber befindliche Medium austreten. Bei nicht druckbeaufschlagter Membraneinrichtung sind diese Ausnehmungen geschlossen, da die Membraneinrichtung an der Trageinrichtung anliegt.

Oberhalb der Trageinrichtung 18 ist eine Membraneinrichtung 24 angeordnet, die als dünne elastische Kunststoffplatte ausgebildet ist, und an dem rechteckförmig umlaufenden Randbereich der Unterkonstruktion 12 über nicht näher dargestellte Befestigungsmittel 26 an der Unterkonstruktion 12 angeschlossen ist. Unterseitig sind an der Membraneinrichtung 24 in dem vorgegebenen Raster der Ausnehmungen 20 der Trageinrichtung 18 als Verschlußeinrichtung Verankerungselemente 28 an die Membraneinrichtung 24 angeformt, die in ihrem nach unten weisenden Endbereich angeformte Widerhakenelemente 30 aufweisen, so daß bei Durchführung der Verankerungselemente 28 durch die Ausnehmungen 20 der Trageinrichtung 18 eine sichere Befestigung gegen Lösen der Membraneinrichtung gegenüber der Trageinrichtung 18 erzielt werden kann. Gleichzeitig kann durch die Ausnehmungen 20 Druckluft in den Bereich zwischen Membraneinrichtung 24 und Trageinrichtung 18 strömen.

Im oberen umlaufenden Randbereich der Unterkonstruktion 12 ist auf der Membraneinrichtung 24 eine Rahmenkonstruktion 32 angeordnet, die eine dichtende Verbindung im Randbereich zwischen der Membraneinrichtung 24 und der Unterkonstruktion über die Befestigungsmittel 26 gewährleistet. Im umlaufenden Randbereich ist eine an die Membraneinrichtung 24 angeformte im wesentlichen rechtförmige, umlaufende Dichtlippe 34 unterseitig vorhanden, die in eine entsprechend an der Unterkonstruktion 12 vorhandene Ausnehmung 36 in Eingriff bringbar ist. Diese Dichtlippe hat einerseits dichtende Funktion und gewährleistet andererseits eine einfache Montage der Membraneinrichtung 24 auf der Unterkonstruktion 12.

Die Membraneinrichtung 24 weist in einem sehr engen Raster vorhandene, in den Figuren nicht dargestellte, schlitzförmige Ausnehmungen auf, die bei ebener Membraneinrichtung 24 geschlossen sind.

Die Belüftervorrichtung 10 ist innerhalb eines Klärbeckens vorhanden und mit in dem Klärbecken eingefülltem Klärmedium umgeben. Wird nun der Hohlraum 22 über die Luftzufuhrstutzen 14 mit Druckluft beaufschlagt, gelangt diese ohne wesentlichen Druckverlust auf der gesamten Fläche der Membraneinrichtung 24 über die Ausnehmungen 20 in den Bereich zwischen der Trageinrichtung 18 und der Membraneinrichtung 24. Dadurch wölbt sich die Membraneinrichtung 24 nach oben und die in der Membraneinrichtung 24 nicht dargestellten Ausnehmungen öffnen sich, wodurch Sauerstoff in das darüber befindliche Klärmedium flächenmäßig verteilt eindringen kann.

Durch die unterseitige Verankerung der Membraneinrichtung 24 an der Trageinrichtung 18 wird einerseits gewährleistet, daß die Membraneinrichtung 24 in vorgebbare Dehnbereiche eingeteilt wird, wobei die Dehnung nicht so große Ausmaße einnimmt, daß sich der Luftaustritt an der Stelle der größten Dehnung konzentriert, wie beispielsweise bei den bekannten Belüftervorrichtungen. Die erfindungsgemäße Belüftervorrichtung 10 gewährleistet vielmehr eine flächenartige gleichmäßige Luftaustrittsmenge über die gesamte Fläche der Belüftervorrichtung 10 bzw. Membraneinrichtung 24. Durch die über die Oberfläche der Membraneinrichtung 24 infolge ihrer erfindungsgemäßen Anordnung nahezu gleichmäßige Austrittsverteilung der Druckluftmenge läßt sich der Kennwert für Belüftungsvorrichtungen deutlich steigern. Zum einen ist ein geringer Druckverlust innerhalb der Belüftervorrichtung 10 vorhanden, bedingt durch die erfindungsgemäße kastenförmige Ausbildung zwischen Membranvorrichtung 24 und Unterkonstruktion 12, das Sauerstoffeintragungsvermögen wird deutlich erhöht und der Sauerstoffeintrag pro Energieeinheit in das Klärmedium wird vorteilhaft erhöht. Dies führt sowohl zu einer verbesserten Klärwirkung als auch zu einem wirtschaftlicheren Einsatz aufgrund der erfindungsgemäßen Belüftungsvorrichtung 10.

Falls die Membraneinrichtung 18 nicht mit Druck beaufschlagt wird, liegt sie unter dem über der Membraneinrichtung 24 anstehenden Flüssigkeitsdruck des Klärmediums auf der Trageinrichtung 18 plan auf, wodurch verhindert wird, daß Klärmedium in den Bereich zwischen Membraneinrichtung 24 und Unterkonstruktion 12 infolge ihrer negativen Dehnung gelangt.

Bei einem zweiten Ausführungsbeispiel einer erfindungsgemäßen Belüftungseinrichtung 40 ist eine Unterkonstruktion 12 vorhanden, die im wesentlichen mit der Unterkonstruktion 12 des ersten Ausführungsbeispiels übereinstimmt. Gleiche Teile tragen gleiches Bezugszeichen und werden nicht nochmals beschrieben. Im Unterschied zu der Belüftungsvorrichtung 10 des ersten Ausführungsbeispiels weist die Belüftungsvorrichtung 40 des zweiten Ausführungsbeispiels eine Trageinrichtung 42 auf, die in einem vorgebbaren Raster angeordnete Schlitze 44 aufweist. Die Tragvorrichtung 42 selbst ist wiederum als plattenförmiges Element ausgebildet, das oberseitig auf der Unterkonstruktion 12 befestigt wird.

Entsprechend den Schlitzen 44 sind auf der Unterseite einer Membraneinrichtung 46 elastische Verankerungselemente 52 als Anschlußeinrichtung angeformt, die durch die Schlitze 44 der Trageinrichtung 42 hindurchgeführt werden können und jeweils in einem unterseitig angeordneten, durchlaufenden Tragprofil 48 verankert werden, was durch eine im wesentlichen pfeilspitzenartige Endausformung im unteren Endbereich ermöglicht wird. Die Tragprofile 48 sind hierbei als Rechteck-Hohlprofile ausgebildet, die eine durchgehende oberseitige Ausnehmung 50 aufweisen, durch die hindurch an der Membraneinrichtung 46 angeformte Verankerungselement 52 verankert werden können, wobei die Verankerungselemente 52 zunächst durch die Schlitze 44 der Trageinrichtung 42 hindurchgesteckt und verankert werden. Die Verankerungselemente 52, die im Querschnitt als Kragarme ausgebildet sind, weisen eine derartige Länge auf, daß zunächst eine Translationsbewegung der Membraneinrichtung 46 unter Druckbeaufschlagung des Hohlraums 22 erfolgt. Das Druckmedium strömt hierbei durch die Ausnehmungen 44 hindurch. Erst danach legen sich die Tragprofile 48 an die Unterseite der Trageinrichtung 42 an und danach wird die Membraneinrichtung 46 in ihren Teilbereichen infolge Druckbeaufschlagung gedehnt. Durch die rastermäßige Anordnung der Verankerungselemente 52 der Membraneinrichtung 46 wird wiederum gewährleistet, daß sich die Membraneinrichtung 46 unter Druckbeaufschlagung nur in gewissen Grenzen über die vorgegebene zu belüftende Fläche dehnt, wodurch eine nahezu gleichmäßige Druckluftbeaufschlagung des über der Membraneinrichtung 46 anstehendem Klärmedium gewährleistet wird.

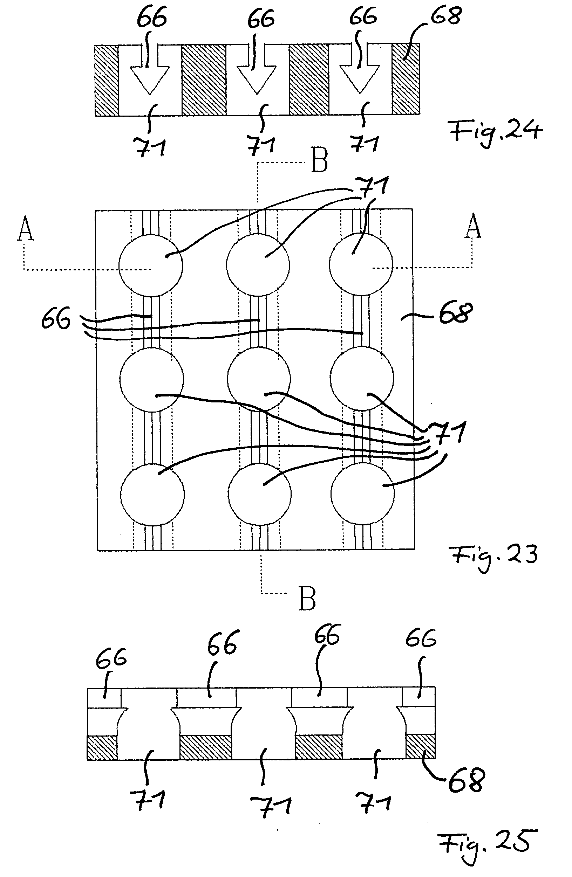

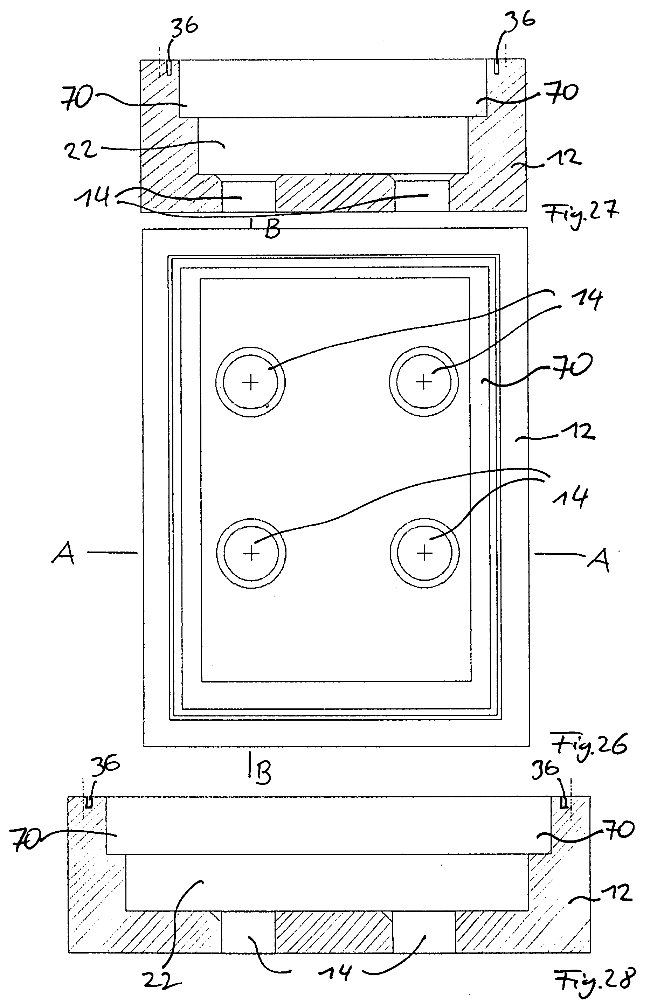

Eine Belüftungsvorrichtung 60 nach einem dritten Ausführungsbeispiel gemäß den Fig. 21 - 29 weist im wesentlichen dieselbe Unterkonstruktion 12 wie die der vorbeschriebenen Ausführungsbeispiele auf. Jedoch ist hier eine Membraneinrichtung 62 vorhanden, die auf ihrer Unterseite von Seitenrand zu Seitenrand durchlaufende Verankerungselemente 64 mit einem pfeilspitzenartigen unterseitigen Endbereich aufweist, wobei diese Verankerungselemente 64 als Anschlußeinrichtung in entsprechende pfeilartig ausgebildete Ausnehmungen 66 einer plattenförmigen Trageinrichtung 68 mit großer Dicke in Eingriff bringbar sind, dabei werden die Verankerungselemente 64 in die Nuten 66 der Trageinrichtung 68 vor der Montage eingeschoben. Die Trageinrichtung 68 wird hierbei in entsprechend an der Unterkonstruktion 12 vorhandenen Ausnehmungen 70 umfangsmäßig gelagert. Die Fixierung der Membraneinrichtung 62 bzw. der Trageinrichtung 68 erfolgt mittels einer Rahmenkonstruktion 32 gemäß dem ersten Ausführungsbeispiel. Die Druckbeaufschlagung der Membraneinrichtung 62 erfolgt über in der Trageinrichtung 68 vorhandene durchgehende Ausnehmungen 71. Die erfindungsgemäße Trageinrichtung kann auch noch weitere Ausnehmungen aufweisen, die nicht zur Verankerung der Trageinrichtung dienen, sondern eine gleichmäßige Druckbeaufschlagung der Membraneinrichtung gewährleisten.

In einer nicht dargestellten weiteren Ausführungsform der erfindungsgemäßen Belüftervorrichtung sind auf der Unterseite der Membraneinrichtung zumindest bereichsweise Querschnittprofile angeformt, die mit der Fläche der Membraneinrichtung ein Hohlprofil bilden. Durch dieses Hohlprofil können Tragelemente eingeschoben werden, die jeweils in entsprechenden Ausnehmungen der Unterkonstruktion mit Hilfe der auf der Unterkonstruktion befestigten Rahmenkonstruktion angeschlossen werden können. Hierbei gewährleistet die Rahmenkonstruktion einerseits eine Befestigung der Membraneinrichtung an der Unterkonstruktion und gleichzeitig eine Lagerung der Tragelemente innerhalb der Unterkonstruktion. Auch durch diese in die Ausnehmungen der Membraneinrichtungen einschiebbaren und der Unterkonstruktion verankerbaren Tragelemente wird gewährleistet, daß sich die Membraneinrichtung nur in dem vorgebbaren Raster der Anordnung der Tragelemente unter Druckbeaufschlagung dehnen kann, wodurch sowohl eine Belüftervorrichtung mit beliebig großer Belüftungsfläche hergestellt werden kann und gleichzeitig sichergestellt werden kann, daß ein gleichmäßiger Flächeneintrag des Druckluftmediums in das über der Membraneinrichtung anstehende Klärmedium gewährleistet wird.

Die dargestellten Ausführungsbeispiele stellen nur beispielhafte Lösungen der erfindungsgemäßen Belüftervorrichtung dar. Erfindungsgemäß wird die Membraneinrichtung unterseitig an einer Trageinrichtung verankert, wodurch eine beliebig große Fläche an Belüftung gewährleistet werden kann, ohne daß sich Klärschlammteile auf der Oberseite der Membraneinrichtung absetzten und die Ausnehmungen der Membraneinrichtung verschließen, da die unterseitige Verankerung eine beliebige Rasteranordnung ermöglicht und die Dehnung der Membraneinrichtung in vorgegebenen Grenzen gehalten werden kann. Gleichzeitig ist eine gleichmäßige Flächenbelüftung mit sehr großen Flächen der einzelnen Belüftervorrichtungen möglich. Die erfindungsgemäße Belüftervorrichtung ermöglicht zudem eine einfache Montage der einzelenen Bauteile und gewährleistet eine dauerhafte Funktion auch bei intermittierendem Betrieb.

## Patentansprüche

1. Belüftervorrichtung (10; 40; 60) für mit einem Flüssigkeitsmedium beaufschlagten Becken, insbesondere Klärbecken, mit
- einer auf seiner Oberseite mit dem Flüssigkeitsmedium in Kontakt bringbaren elastischen Membraneinrichtung (24; 46; 62), die infolge ihrer Elastizität sich öffnende und verschließende Ausnehmungen aufweist, und
- einer auf der Unterseite der Membraneinrichtung angeordneten Unterkonstruktion (12), an der die Randbereiche der Membraneinrichtung (24; 46; 62) dicht angeschlossen sind, wobei der Bereich zwischen Unterkonstruktion (12) und Membraneinrichtung (24; 46; 62) mit einem gasförmigen Druckmedium beaufschlagbar ist und sich die Membraneinrichtung (24; 46; 62) bei Druckbeaufschlagung wölbt, wodurch sich die Ausnehmungen öffnen und das Druckmedium in das darüberbefindliche Flüssigkeitsmedium strömen kann,
**dadurch gekennzeichnet**, daß
zwischen der Membraneinrichtung (24; 46; 62) und der Unterkonstruktion (12) eine an der Unterkonstruktion (12) befestigte Trageinrichtung (18; 42; 68) vorhanden ist, an der die Membraneinrichtung (24; 46; 62) zumindest bereichsweise oder punktuell innerhalb ihrer Randbereiche mittels einer Anschlußeinrichtung (28; 52; 64) angeschlossen ist.

2. Belüftervorrichtung nach Anspruch 1,
**dadurch gekennzeichnet**, daß
die Unterkonstruktion (12) als Hohlkasten oder Wanne ausgebildet ist.

3. Belüftervorrichtung nach den Ansprüchen 1 oder 2,
**dadurch gekennzeichnet**, daß
an die Membraneinrichtung (24; 46; 62) als Anschlußeinrichtung unterseitig zumindest ein Verankerungselement (28; 52; 64) angeformt ist, das mit der Trageinrichtung (18; 42; 68) in Eingriff bringbar ist.

4. Belüftervorrichtung nach Anspruch 3,
**gekennzeichnet durch**
in einem vorgebbaren Raster angeordnete Verankerungselemente (28; 52; 64).

5. Belüftervorrichtung nach einem oder mehreren der vorstehenden Ansprüche,
**dadurch gekennzeichnet**, daß
die Anschlußeinrichtung (28; 52; 64) dergestalt ausgebildet ist, daß nach Druckbeaufschlagung des zwischen der Membraneinrichtung (24; 46; 62) und der Unterkonstruktion (12) vorhandenen Raumes (22), zunächst zumindest bereichsweise eine Translationsbewegung der Membraneinrichtung (24; 46; 62) möglich ist und danach die Membraneinrichtung (24; 46; 62) infolge Druckbeaufschlagung gedehnt wird.

6. Belüftervorrichtung nach einem oder mehreren der vorstehenden Ansprüche,
**dadurch gekennzeichnet**, daß
die Anschlußeinrichtung (28; 52; 64) zumindest ein Kragarmelement aufweist, das mit einer an der Trageinrichtung (18; 42; 68) vorhandenen Ausnehmung (20; 44; 66) in Eingriff bringbar ist.

7. Belüftervorrichtung nach einem oder mehreren der vorstehenden Ansprüche,
**dadurch gekennzeichnet**, daß
die Trageinrichtung (18; 42; 68) als Plattenelement mit punktuellen oder bereichsweisen Ausnehmungen (20; 44; 66) ausgebildet ist.

8. Belüftervorrichtung nach einem oder mehreren der vorstehenden Ansprüche 1 - 5,
**dadurch gekennzeichnet**, daß
die Membraneinrichtung zumindest bereichsweise unterseitig angeformte, einen Hohlraum bildende Profilelemente aufweist, innerhalb derer im wesentlichen stabförmige Tragelemente anordenbar sind, die eine Trageinrichtung bilden.

9. Belüftervorrichtung nach einem oder mehreren der vorstehenden Ansprüche 1 - 5 oder 7,
**dadurch gekennzeichnet**, daß
an die Membraneinrichtung im Randbereich eine nach unten überstehende, umlaufende Dichtlippe (34) angeformt ist, die mit einer in der Unterkonstruktion (12) vorhandenen entsprechenden Ausnehmung (36) in Eingriff steht.

10. Belüftervorrichtung nach einem oder mehreren der vorstehenden Ansprüche 1, 2, 4, 5, 6 oder 9,
**dadurch gekennzeichnet**, daß
die Anschlußeinrichtung von Randbereich zu Randbereich der Unterkonstruktion durchlaufende Tragprofilelemente aufweist.

11. Belüftervorrichtung nach einem oder meheren der Ansprüche 1 - 7, 9, 10,
**dadurch gekennzeichnet**, daß
die Membraneinrichtung (62) zumindest ein von Randbereich zu Randbereich durchlaufend angeformtes Verankerungselement (64) als Anschlußeinrichtung aufweist, das in eine entsprechend der Trageinrichtung (68) vorhandenen Ausnehmung oder Nut (66) eingreift.
